# EUROPEAN PATENT APPLICATION

(11) **EP 2 634 856 A1**
(43) Date of publication of application: **04.09.2013**
(21) Application number: 11870603.5
(22) Date of filing: 10.08.2011
(51) Int. Cl.: H01M 10/44, H02J 7/00, H01R 13/02

(54) **INTELLIGENTLY IDENTIFIED CHARGING METHOD AND CHARGING DEVICE, AND CONNECTOR**

(71) Applicant: Shenzhen Likkpower Electronics Co., Ltd., Shenzhen, Guangdong 518000 (CN)
(72) Inventor: LEI, Canhuo, Shenzhen Guangdong 518000 (CN)
(74) Representative: Protector IP Consultants AS
(86) International application number: PCT/CN2011/078219
(87) International publication number: WO 2013/020281

(57) **Abstract**

The present invention provides intelligent identification charging method, charging device and connector, the charging method includes: monitoring the voltage signal at the detection pin of the connector; generating a first voltage control signal, according to the voltage signal at the detection pin; according to the first voltage control signal, regulating the output voltage and outputting the output voltage via the first charging pin of connector. In the present invention, a corresponding voltage is output through gathering a signal at the detection pin of the connector, and controlling the voltage according to the gathered signal at the detection pin so as to charge for the different electronic devices, which solve the problem that power adapters of all kinds of electronic products are not matched with each other. Meanwhile, in the present invention, the intelligent identification charging device can be compatible with the connection of the USB interface, so that it can charge for the electronic device by the USB connector.

## Description

### TECHNICAL FIELD

The present invention relates to the charging technical field, and more particularly to an intelligent identification method for charging and charging device, and connector.

### BACKGROUND

With the wide use of all kinds of electronic products such as mobile phones, laptops, etc., lithium batteries have been widely used in the electronic products which benefit for large stored energy, long life, small size, etc.. But most lithium batteries are separately encapsulated based on types of electronic products and are not in common use, so a variety of electronic products need to provide their own charging equipment.

Because of differences of voltage needs, the existing power port connectors of the electronic products are vastly different in the shape, structure and function, and have no uniform standard which makes different electronic products require different power chargers and cause the waste of resources. Meanwhile, it is very distressing for users to carry a lot of different power chargers when different electronic products are carried on travel.

### SUMMARY

A technical problem solved by the present invention is to provide an intelligent identification charging method which realizes charging for different electronic products.

The present invention provides an intelligent identification charging method which charges for an electronic equipment through a connector, the connector includes a detection pin and a first charging pin, the charging method includes:
monitoring a voltage signal at the detection pin of the connector;
generating the first voltage control signal according to the voltage signal at the detection pin;
regulating an output voltage according to the first voltage control signal and outputting the output voltage via the first charging pin of the connector.

Preferably, after the regulating an output voltage according to the first voltage control signal and output the voltage via the first charging pin of the connector, the charging method further includes:
sampling the voltage signal at the first charging pin;
synthesizing the voltage signal at the detection pin and the voltage signal at first charging pin form a voltage synthesis signal;
generating the second control signal according to the voltage synthesis signal;
regulating the output voltage according to the second voltage control signal and outputting the output voltage via the first charging pin of the connector.

Preferably, regulating of the output voltage includes PWM pulse width modulation.

Preferably, the connector further includes the second charging pin, the step of the monitoring the voltage signal at the detection pin of the connector includes:
judging whether there is a signal generated at the detection pin of the connector, If there is a signal, the USB charging circuit is closed and voltage signals are gathered at the detection pin;
otherwise, the USB charging circuit is opened, the USB charging circuit generates output voltage output by the second charging pin.

The present invention also provides an intelligent identification charging device, which is connect with a charging equipment by the connector, the connector includes a detection pin and a first charging pin, the charging device includes:
a monitoring unit connected with the detection pin, and used to monitor the signals at the detection pin;
a voltage control unit connected with the monitoring unit, and used to generate a first voltage control signal, according to a voltage signal gathered by the monitoring unit;
a voltage output unit connected with the voltage control unit, and used to regulate the voltage according to a first voltage control signal gathered by the voltage control unit and output the voltage via the first charging pin.

Preferably, the voltage control unit is specifically used to generate a first voltage control signal according to the comparison results between the voltage signals gathered by the monitoring unit and the threshold voltage.

Preferably, the charging device further includes:
a voltage gathering unit connected with the first charging pin, and used to gather the voltage signal at the first charging pin;
a voltage synthesis unit used to synthesize the voltage signal at the detection pin and the voltage signal at first charging pin to form a voltage synthesis signal;
the voltage control unit is further used to generate a second control signal according to the voltage synthesis signal;
the voltage output unit is further used to regulate the voltage according to the second voltage control signal and output the voltage via the first charging pin of the connector;

Preferably, the voltage synthesis signal is generated by a logical combination or addition and subtraction between the voltage signal at the detection pin and the voltage signal at the first charging pin.

Preferably, the voltage output unit includes the PWM pulse width modulation circuit.

Preferably, the charging device further includes a USB charging circuit, the connector also includes a second charging pin, and the monitoring unit is further used to:
judge whether there is a signal generated at the detection pin, if there is a signal, close the USB charging circuit and gather voltage signals at the detection pin;
otherwise, the USB charging circuit is opened, which generates an output voltage output by the second charging pin.

The present invention further provides a connector used to connect with the intelligent identification charging device, the intelligent identification charging device includes a monitoring unit, a voltage control unit and a voltage output unit, the connector includes:
a monitoring pin connected with the monitoring unit, and used to be gathered by the monitoring unit, so that the voltage control unit generates a first voltage control signal according to the gather signals;
a first charging pin connected with the voltage output unit, and used to output the voltage regulated by the voltage output unit according the first voltage control signal.

Preferably, the connector further includes a second charging pin connected with the USB charging circuits, and used to output the voltage generated by the USB charging circuit.

Preferably, the connector is the connector receptacle.

Preferably, the connector is the connector plug, the detection pin of the connector is connected to an internal resistor, one end of the internal resistor is connected to the detection pin, and the other end is connected to the ground.

In the present invention, a corresponding voltage is output through gathering a signal at the detection pin of the connector, and controlling the voltage according to the gathered signal at the detection pin so as to charge for the different electronic devices. Meanwhile, in the present invention, the intelligent identification charging device can be compatible with the connection of the USB interface, so that it can charge for the electronic device by the USB connector.

### BRIEF DESCRIPTION OF THE DRAWINGS

FIG. 1 is a structure view of the intelligent identification charging device in accordance with a first embodiment of the present invention;
FIG. 2a is an internal structure view of a connector receptacle used in the intelligent identification charging device in accordance with the first embodiment of the present invention;
FIG. 2b is an internal structure view of the connector plug of the electronic equipment used in the intelligent identification charging device in accordance with the first embodiment of the present invention;
FIG. 3 is a structure view of the intelligent identification charging device in accordance with a second embodiment of the present invention;
FIG. 4 is a circuit structure view of the intelligent identification charging device in accordance with the first embodiment of the present invention;
FIG. 5 is a circuit structure view of a USB charging circuit of the intelligent identification charging device in accordance with a second embodiment of the present invention;
FIG. 6 is a schematic view of the intelligent identification charging method in accordance with the first embodiment of the present invention;
FIG. 7 is a schematic view of the intelligent identification charging method in accordance with the second embodiment of the present invention;

The realization, functional characteristics, advantages and embodiments of the present invention will be explained below in detail with reference to the accompanying drawings.

### DETAILED DESCRIPTION OF THE PREFERRED EMBODIMENTS

It is to be appreciated that the following description of the embodiment(s) is merely exemplary in nature and is no way intended to limit the invention, its application, or uses.

Because of the differences of voltage needs, The existing power port of the electronic products are significantly different in the shape, structure and function. Such as the port of phone, MP3, Bluetooth headset, tablet PCs, portable projectors, portable printer and so on can adopt a uniform standard USB connector. However, some ports, such as notebook computer etc., need to adopt a matched special power port, which is not only inconvenient because different products require different power adapter, but also cause a waste of resources.

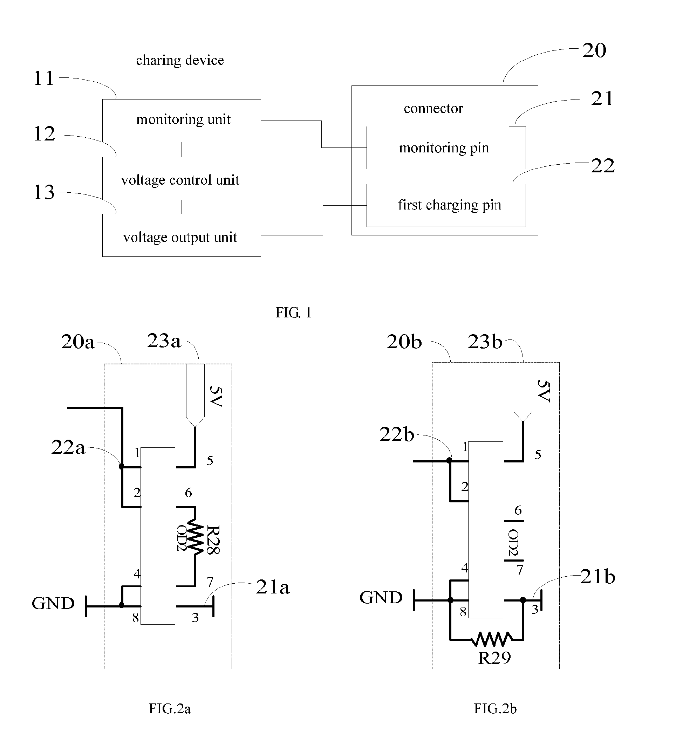

Referring to FIG. 1 is a structure view of the intelligent identification charging device in accordance with a first embodiment of the present invention. The intelligent identification charging device is connected to the charging equipment by the connector 20, the connector 20 includes a detection pin 21 and a first charging pin 22. The intelligent identification charging device includes:
a monitoring unit 11 used to monitor voltage signals at the detection pin 21;
a voltage control unit 12 connected with the monitoring unit 11, and used to generate a first voltage control signal according to the voltage signals gathered by the monitoring unit 11;
a voltage output unit 13 connected with the voltage control unit 12, and used to regulate the voltage according to a first voltage control signal gathered by the voltage control unit 12 and output the voltage via the first charging pin 22.

The connector 20 includes a connector plug 20b and a connector receptacle 20a, the connector receptacle 20a is connected to the intelligent identification charging device, and the connector plug 20b is connected to a charging equipment. Referring to FIG. 2a is a structure view of the connector receptacle used in the intelligent identification charging device in accordance with the embodiment of the present invention. In the connector receptacle 20a, the pin 1 and the pin 2 are a first charging pins 22a. The pin 4 and the pin 8 are ground pin. The pin 3 is the detection pin 21a. The pin 5, the pin 6 and the pin 7 are acted as functional extension, such as signal transmitting etc.. It is noted that the connector receptacle 20a is not limited the above mentioned pin numbers. Referring to FIG. 2b is an internal structure view of the connector plug of the electronic equipment used in the intelligent identification charging device in accordance with the first embodiment of the present invention. In the connector plug 20b, the pin 1 and the pin 2 are the first charging pin 22b, the pin 4 is the ground pin, the pin 3 is the detection pin 21b, there is a resistor R29 disposed between the detection pin 21b and the ground pin. When the connector receptacle 20a is connected to the connector plug 20b, and the connector plug20b is connected to the charging equipment, the R29 connected to the detection pin 21b of the connector plug 20b will be accessed in the intelligent identification charging device, so that the monitoring unit 11 can monitor that the detection pin 21a of the connector receptacle 20a has been connected and gather the voltage signal at the detection pin 21 a, and then transmit the voltage signal to voltage control unit 12.

The voltage control unit 12 can generate a first voltage control signal according to the comparison results between voltage signals gathered by the monitoring unit 11 and the threshold voltage, to regulate the voltage generated by the voltage output unit 13 and output the voltage via the first charging pin 22a.In the embodiment, the intelligent identification charging device output corresponding voltage through gathering signals at the detection pin 21a of the connector receptacle 20a, and making voltage control according to the gathered signals at the detection pin 21 a, so as to charge for different electronic devices.

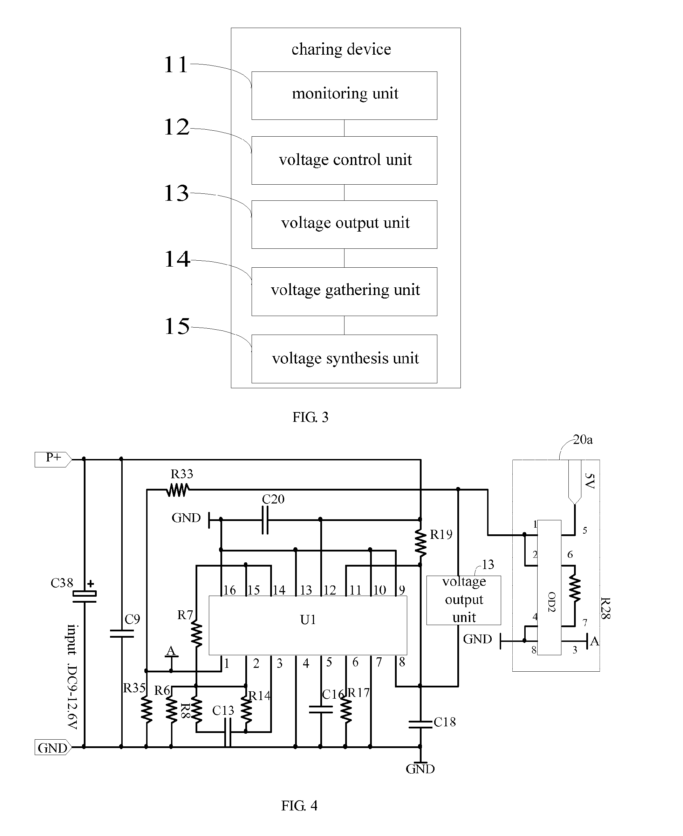

Referring to FIG. 3, the intelligent identification charging device further includes:
a voltage gathering unit 14 connected with the first charging pin 22a, and used to gather the voltage signal at the first charging pin;
a voltage synthesis unit 15 used to synthesize the voltage signal at the detection pin 21a and the voltage signal at the first charging pin 22a to form a voltage synthesis signal;

The voltage control unit 12 is further used to generate a second voltage control signal by comparing the voltage synthesis signal with the threshold voltage so that the voltage control unit 13 can regulate the output voltage and output the voltage via the first charging pin 22a according to the second voltage control signal;

The voltage synthesis unit 15 is used to form a voltage synthesis signal by a logical combination or addition and subtraction between the voltage signal at the detection pin 21a and the voltage signal at the first charging pin 22a.

Through the process of the repeated gathering, comparing and regulating etc., the output voltage can achieve a stable output of the output voltage and output the matched charging voltage with the charging equipment. The regulation of the output voltage is either the PWM pulse width modulation or other increase /reduction voltage circuit modulation, etc.

FIG. 4 is a circuit structure view of the intelligent identification charging device in accordance with the embodiment of the present invention. The monitoring unit 11 and voltage control unit 12 can be integrated in a processor chip U1, the port 1 of the processor chip U1 is connected to the detection pin 3 of the connector receptacle 20a and the port 8 of the processor chip U1 is connected to the voltage output unit 13, it is noted that, firstly, the voltage output unit 13 outputs a default output voltage (e.g. 12V). When the charging equipment is connected to the connector receptacle 20a by the connector plug 20b, the internal resistor R29 in the connector plug 20b is connected to the port 1 of the chip U1 by the detection pin 3 of the connector receptacle 20a (such as mark A in the view), so the monitoring unit 11 of the processor chip U1 will gather the voltage signals at the detection pin 3, which is inputted in the voltage control unit 12 of the processor chip U1 by port 1,the voltage control unit 12 compares voltage signal gathered by the monitoring unit 11 with the threshold voltage, to generate the first voltage control signal according to the comparing results (the threshold voltage is greater than the sampling voltage signal), and outputs the voltage to the voltage output unit 13 by the port 8 of the processor chip U1, so that the voltage output unit 13 can generate higher output voltage according to the regulation of the first voltage control signal, which is output by the first charging pin 1 and pin 2 of the connector receptacle 20a, thereby charging for charging equipments.

The voltage gathering unit 14 includes a sampling resistor R33 and dividing resistor R35. One end of the sampling resistor R33 is connected to the first charging pin 1 and pin 2 of the connector receptacle 20a, the other end is connected to dividing resistor R35, one end of the R35 connected to the sampling resistor R33 is connected to the port 1 of the processor chip U1, the other end of the R35 is connected to the ground. The voltage signal gathered by the voltage gathering unit 14 and the voltage signal gathered by the monitoring unit 11 at the detection pin 3 form the voltage synthesis signal at the port 1 of the processor chip U1,which makes the voltage control unit 12 compare the voltage synthesis signal with the threshold, to output the second voltage control signal, so that the voltage output unit 13 can be regulated according to the second voltage control signal, the output voltage can output matched charging voltage with the charging equipment through the process of the repeated gathering, comparing and regulating etc.. For example, when the voltage signals gathered by the voltage gathering unit 14 is higher than the charging voltage matched with the charging equipment, and then the voltage synthesis signal will be increased, so that the voltage control unit 12 can compare the increased voltage with the threshold value and outputs the corresponding voltage control signal so as to control the decreased voltage of the voltage outputting unit 13, and output by the charging pin 22a.

Because most of the electronic products can use a USB connector to charge by connecting with other equipments, so the intelligent identification charging device of the present invention is further compatible with the connection of the USB interface. Referring to FIG. 2a and FIG. 2b, the connector receptacle 20a also includes a second charging pin 23a, namely, the pin 5 in FIG. 2a. The pin 8 and the pin 4 are the ground pin connected to the ground. In the corresponding connector plug 20b, the pin 5 is a second charging pin 23b. The pin 8 and the pin 4 are the ground pin connected to the ground.

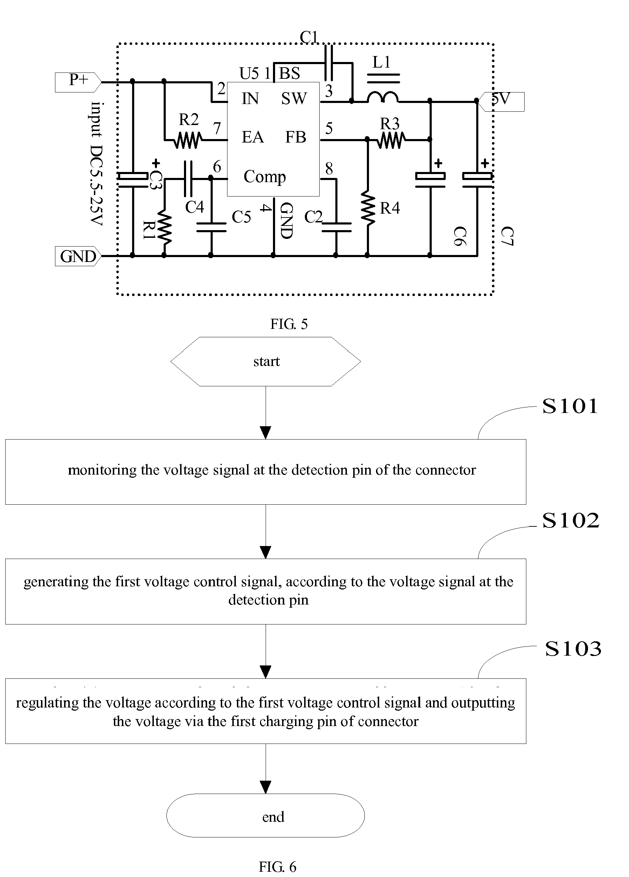

The intelligent identification charging device also includes a USB charging circuit, as shown in FIG. 5. The unit monitoring 11 is specifically used to judge whether there is a signal generated at the detection pin 21a of the connector receptacle 20a, if there is a signal, the USB charging circuit is closed and voltage signals are gathered at the detection pin 21a; otherwise, the USB charging circuit is opened, the USB charging circuit generates an output voltage which is output by the second charging pin 23a of the connector receptacle 20a. The USB charging circuit is normally in open state, namely, the USB charging circuit always has a voltage output. When the charging equipment is connected to the connector receptacle 20a by the USB connector, the pins of the USB connector is respectively connected to the pin 5, the pin 6, the pin 7 and the pin 8 of the connector receptacle 20a, the voltage generated by the USB charging circuit is output via the second charging pin 23a of the connector receptacle 20a, thereby charging for the charging equipment by using a USB connector. However, when the electronic equipment is connected to the connector receptacle 20a via the connector plug 20b, i.e. the electronic equipment is connected to the detection pin 21 a of the connector receptacle 20a, the connected resistor R29 can generate a signal, thus, the monitoring unit 11 closes the USB charging circuit, the voltage outputting unit 13 will generate the corresponding voltage, which is output by the first charging pin 1 and pin 2 of the connector receptacle 20a, thereby to charge for the different charging equipment. It should be explained that the connector used in the intelligent identification charging device can charge for the different electronic products, such as a laptop, and is also compatible with a USB, and the connector can charge for the electronic products with the USB interface connection. Of course, the connector is not limited to the charging function, which can also have the data transmission function. Any connector which is used for charging or transmitting for the two kinds of electronic products is within the protection scope of the present invention.

In the present embodiment, the intelligent identification charging device not only can gather the voltage signal at the detection pin 21 a of the connector receptacle 20a, and output the corresponding voltage according to the voltage signal, which matched with different charging equipments for charging, but further is compatible with USB interface in order to charge for the charging equipment.

FIG. 6 is a schematic view of the intelligent identification charging method in accordance with the embodiment of the present invention. The electronic equipments are charged through the connector in the intelligent identification charging method, and the connector includes a detection pin and a first charging pin, the charging method includes the following steps:
step S101, monitoring the voltage signal at the detection pin of the connector;
step S102, generating the first voltage control signal, according to the voltage signal at the detection pin;
step S103, regulating the voltage according to the first voltage control signal and outputting the voltage via the first charging pin of connector.

The structure of the connector has been described in detail, which does not repeat here. When the connector receptacle 20a is connected to the connector plug 20b, the resistor R29 at the detection pin 21b of the connector plug 20b will be accessed in an inner of the intelligent identification charging device so that the monitoring unit 11 can monitor that the detection pin 21 a of the connector receptacle 20a has been connected and gather the voltage signals at the detection pin 21a, and then the voltage signal is transmitted to the voltage control unit 12.

The voltage control unit 12 can generate a voltage control signal according to the comparison results between the voltage signal gathered by the monitoring unit 11 and the threshold voltage, to thereby regulate the voltage generated by the voltage output unit 13 and then output the voltage via the first charging pin 22a.

In the intelligent identification charging method of the embodiment, the corresponding voltage is output through monitoring signal at the detection pin 21a of the connector receptacle 20a, and the voltage is controlled according to the signal at the detection pin 21 ato thereby charge for the different electronic devices.

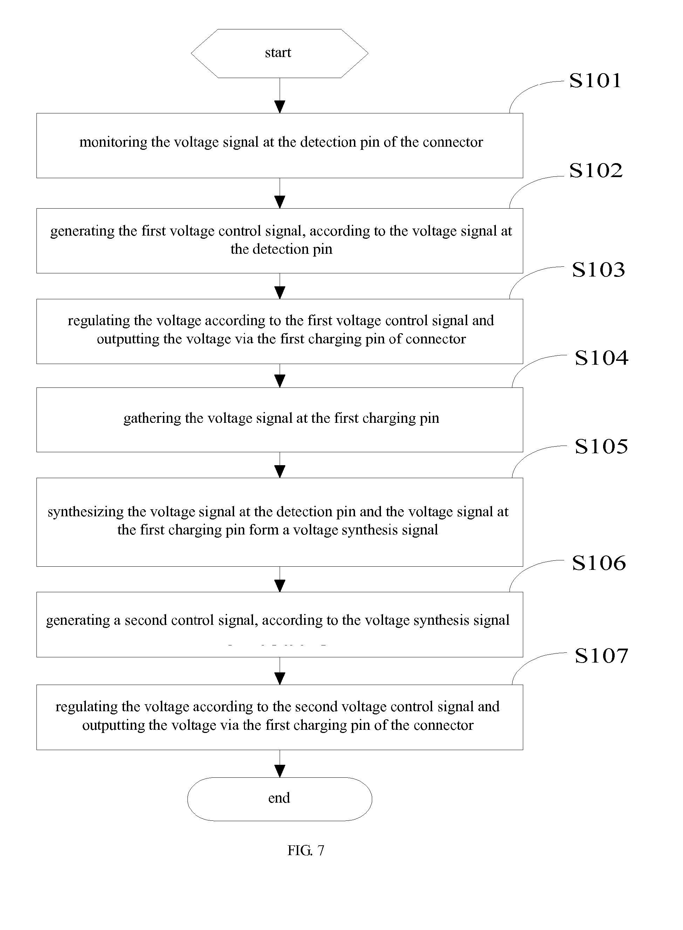

Referring to FIG. 7, after the step S103, the method further includes:
step S104, gathering the voltage signal at the first charging pin;
step S105, synthesizing the voltage signal at the detection pin and the voltage signal at the first charging pin form a voltage synthesis signal.
step S106, generating a second control signal, according to the voltage synthesis signal.
step S107, regulating the voltage according to the second voltage control signal and outputting the voltage via the first charging pin of the connector.

The voltage control unit 12 is also used to generate the second voltage control signal by comparing the voltage synthesis signal with the threshold voltage, so that the voltage control unit 13 can regulate the output voltage and output the voltage via the first charging pin 22a according to the second voltage control signal.

Through the process of the repeated gathering, comparing and regulating etc., the output voltage can achieve a stable output and output the matched charging voltage with the charging equipment. The regulation of the output voltage is either the PWM pulse width modulation or other increase/reduction voltage circuit modulation, etc..

Because most of the electronic products can use a USB connector to charge by connecting with other equipments, the intelligent identification charging device of the present invention is further compatible with the USB interface, the step S101 includes:
judging whether there is a signal generated at the detection pin 21 a of the connector receptacle 20a, if there is a signal, the USB charging circuit is closed and voltage signals are gathered at the detection pin 21a; otherwise, the USB charging circuit is opened to generate an output voltage which is output by the second charging pin 23a of the connector receptacle 20a.

The USB charging circuit is normally in open state, namely, the USB charging circuit is always in working state. When the electronic equipment is connected to the connector receptacle 20a by the USB connector, the pins of the USB connector are respectively connected to the pin 5, the pin 6, the pin 7 and the pin 8 of the connector receptacle 20a, so that the voltage generated by the USB charging circuit is output via the second charging pin 23a of the connector receptacle 20a, to thereby charge for the charging equipment by using a USB connector. However, when the electronic equipment is connected to the connector receptacle 20a via the connector plug 20b, i.e. the electronic equipment is connected to the detection pin 21a of the connector receptacle 20a, the connected resistor R29 can generate signal, thus, the monitoring unit 11 closes the USB charging circuit, the voltage outputting unit 13 will generate the corresponding voltage, which is output by the first charging pin 1 and pin 2 of the connector receptacle 20a to thereby charge for charging equipments.

In the present embodiment, the intelligent identification charging device not only can gather the voltage signal at the detection pin 21a of the connector receptacle 20a, and output the corresponding voltage according to the voltage signal, which is matched with different charging equipment for charging, but also is compatible with the USB interface so as to charge for charging equipment.

The above-mentioned description is only a preferred embodiment of the present invention, which is not therefore limit the patent range of the present invention. Any equivalent structures, or equivalent processes transform or the direct or indirect use in other related technical fields made by the specification and the FIG.s of the present invention are similarly included the range of the patent protection of the present invention.

## Claims

1. An intelligent identification charging method, wherein charging for an electronic equipment through a connector, the connector comprises a detection pin and a first charging pin, the charging method comprises:
monitoring a voltage signal at the detection pin of the connector;
generating a first voltage control signal according to the voltage signal at the detection pin;
regulating an output voltage according to the first voltage control signal, and outputting the output voltage via the first charging pin of the connector.

2. The intelligent identification charging method as claimed in claim 1, wherein after regulating an output voltage according to the first voltage control signal and outputting the output voltage via the first charging pin of the connector, the charging method further comprises:
gathering a voltage signal at the first charging pin;
forming a voltage synthesis signal by synthesizing the voltage signal at the detection pin and the voltage signal at the first charging pin;
generating a second control signal according to the voltage synthesis signal;
regulating the output voltage according to the second voltage control signal, and outputting the output voltage via the first charging pin of the connector.

3. The intelligent identification charging method as claimed in claim 2, wherein regulating of the output voltage comprises PWM pulse width modulation.

4. The intelligent identification charging method as claimed in claims 1 to 3, wherein the connector further comprises a second charging pin, the step of monitoring the voltage signal at the detection pin of the connector comprises:
judging whether there is a signal generated at the detection pin of the connector, if there is a signal, the USB charging circuit is closed and voltage signals are gathered at the detection pin;
otherwise, the USB charging circuit is opened, the USB charging circuit generates an output voltage output by the second charging pin.

5. An intelligent identification charging device, wherein the intelligent identification charging device is connected with a charging equipment by a connector, the connector comprises a detection pin and a first charging pin, the charging device comprises:
a monitoring unit connected with the detection pin and used to monitor a signal at the detection pin;
a voltage control unit connected with the monitoring unit, and used to generate a first voltage control signal according to a voltage signal gathered by the monitoring unit;
a voltage output unit connected with the voltage control unit, and used to regulate the output voltage according to the first voltage control signal gathered by the voltage control unit and output the output voltage via the first charging pin.

6. The intelligent identification charging device as claimed in claim 5, wherein the voltage control unit is specifically used to generate the first voltage control signal according to the comparison results between the voltage signal gathered by the monitoring unit and the threshold voltage.

7. The intelligent identification charging device as claimed in claim 5, wherein the charging device further comprises:
a voltage gathering unit connected with the first charging pin, and used to gather the voltage signal at the first charging pin;
a voltage synthesis unit used to synthesize the voltage signal at the detection pin and the voltage signal at the first charging pin to form a voltage synthesis signal;
the voltage control unit further used to generate a second control signal, according to the voltage synthesis signal;
the voltage output unit used to regulate the output voltage according to the second voltage control signal and output the output voltage via the first charging pin of the connector.

8. The intelligent identification charging device as claimed in claim 7, wherein the voltage synthesis signal is generated by a logical combination or addition and subtraction between the voltage signal at the detection pin and the voltage signal at the first charging pin.

9. The intelligent identification charging device as claimed in claim 5 wherein the voltage output unit comprises a PWM pulse width modulation circuit.

10. The intelligent identification charging device as claimed in claims 5 to 9, wherein the charging device further comprises a USB charging circuit, the connector further comprises a second charging pin, and the monitoring unit is further used to judge whether there is a signal generated at the detection pin, if there is a signal, the USB charging circuit is closed and voltage signals at the detection pin are gathered;
otherwise, the USB charging circuit is opened to generate an output voltage output by the second charging pin.

11. A connector, wherein the connector is connected with the intelligent identification charging device which is described in the claim 5, the intelligent identification charging device comprises a monitoring unit, a voltage control unit and a voltage output unit, the connector comprises:
a monitoring pin connected with the monitoring unit, and used to be gathered by the monitoring unit so that the voltage control unit generates a first voltage control signal according to the gathered signal;
a first charging pin connected with the voltage output unit and used to output a voltage regulated by the voltage output unit according the first voltage control signal.

12. The connector as claimed in claim 11, wherein the connector further comprises a second charging pin connected with the USB charging circuit and used to output a voltage generated by the USB charging circuit.

13. The connector as claimed in claim 12, wherein the connector is a connector receptacle.

14. The connector as claimed in claim 12, wherein the connector is a connector plug, a detection pin of the connector plug is connected to an internal resistor, one end of the internal resistor is connected to the detection pin, and the other end thereof is connected to ground.
